# FASCICULE DE BREVET EUROPEEN

(11) **EP 1 258 771 B1**
(45) Date de publication et mention de la délivrance du brevet: **19.01.2005**
(21) Numéro de dépôt: 02291088.9
(22) Date de dépôt: 30.04.2002
(51) Int. Cl.: G02B 27/01

(54) **Architecture optique à encombrement réduit pour viseur de casque grand champ**
Raumsparende optische Architektur für Helmvisier mit grossem Sichtfeld
Space saving optical architecture for wide field of view helmet visor

(30) Priorité: 15.05.2001 FR 0106397
(43) Date de publication de la demande: 20.11.2002
(73) Titulaire: Thales, 75008 Paris (FR)
(72) Inventeur: Bignolles, Laurent, Thales Intellectual Property, 94117 Arcueil Cedex (FR); Baudou, Joel, Thales Intellectual Property, 94117 Arcueil Cedex (FR)

(56) Documents cités:
- EP-A- 0 531 121
- WO-A-01/02893
- WO-A-91/04508
- FR-A- 2 769 721
- US-A- 3 923 370
- US-A- 5 734 505
- US-B1- 6 201 646
- PATENT ABSTRACTS OF JAPAN vol. 1999, no. 10, 31 août 1999 (1999-08-31) & JP 11 125791 A (OLYMPUS OPTICAL CO LTD), 11 mai 1999 (1999-05-11) & US 6 333 820 A (OLYMPUS OPTICAL CO LTD)

## Description

La présente invention concerne une architecture optique à encombrement réduit pour viseur de casque grand champ, et s'applique plus particulièrement aux viseurs de casques pour pilotes d'avion ou d'hélicoptère.

Le viseur de casque permet au pilote d'afficher des informations relatives au vol et/ou une image provenant de capteurs, par exemple de type intensificateur de lumière (IL). Couplé à une détection de position, il permet d'accroître considérablement les performances du système de visée en comparaison avec un viseur tête haute fixe par rapport à l'axe de l'avion.

L'image présentée au pilote est projetée soit au travers d'un combineur (pièce de verre ou de plastique semi-réfléchissante placée devant l'oeil), soit directement grâce à la visière du casque. Cette dernière solution présente l'avantage d'offrir un champ de vision périphérique plus important et donc un plus grand confort d'utilisation. Les viseurs de casque à projection sur visière que l'on peut trouver actuellement sur le marché permettent aujourd'hui d'afficher des champs de l'ordre de 40° (champ total) sur des visières constituées de deux demi-visières sphériques.

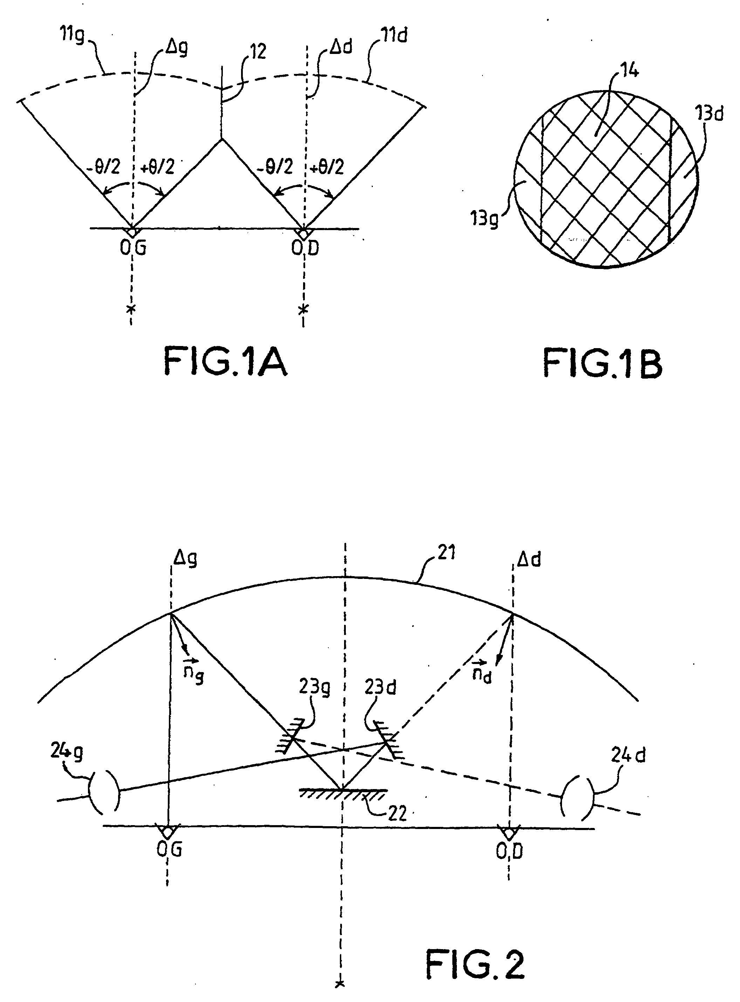

Il apparaît aujourd'hui un besoin d'avoir un champ plus important (60° à 80°) afin de fournir au pilote des informations dans son champ périphérique. Ces informations permettent en effet d'effectuer des vols basse hauteur et grande vitesse dans de meilleures conditions de sécurité. Le besoin d'afficher des champs plus grands dans un viseur de casque exclut l'utilisation d'une visière à deux éléments. En effet, au-delà d'une valeur de champ horizontal située aux alentours de +/-22° (soit 45° de champ) et pour un écart inter pupillaire standard (63 mm), la séparation entre les deux éléments de la visière ne permet plus un recouvrement total entre les champs vus de l'oeil gauche et de l'oeil droit. Les figures 1A et 1B illustrent ainsi par des schémas le cas de l'utilisation d'une visière à deux éléments. La figure 1A représente de manière très simplifiée une vue de dessus d'une visière à deux éléments 11 g (devant l'oeil gauche OG) et 11d (devant l'oeil droit OD), d'axes oculaires respectifs Δg et Δd parallèles, séparés par une séparation 12, dans le cas d'un champ θ supérieur à 45° (par exemple 60°). L'axe oculaire est défini par l'axe qui passe par le centre de la pupille de l'oeil et qui est perpendiculaire au plan de ladite pupille. La figure 1B représente les champs vus de l'oeil gauche et de l'oeil droit dans le cas d'une configuration du type de celle de la figure 1A. Il apparaît que le champ 13g vu de l'oeil gauche et le champ 13d vu de l'oeil droit se recouvrent partiellement dans une zone notée 14 sur la figure 1B. Ce recouvrement partiel entraîne pour le pilote des effets visuels gênants du fait de la luminance accrue au centre. On peut supprimer la séparation 12 en mettant en oeuvre des éléments de visière à axes divergents. Mais cette méthode accentue encore la gêne due au recouvrement binoculaire. Par ailleurs, pour un casque de pilote d'avion par exemple, la mise en place d'une visière à deux éléments n'est pas adaptée car elle constitue une structure fragile qui peut casser en cas d'éjection du pilote.

La figure 2 représente une vue de dessus simplifiée et partielle d'un viseur de casque avec une visière mono élément. Comme cela apparaît sur cette figure, l'utilisation d'une visière constituée d'un seul élément (noté 21 sur la figure 2) entraîne des difficultés de réalisation technique du fait qu'elle impose un trajet relativement long dans l'air entre le premier miroir de renvoi frontal 22 et les moyens de formation d'images, notés 24g sur la voie de l'oeil gauche OG (en trait plein sur la figure 2) et 24d sur la voie de l'oeil droit OD (en trait pointillé). Cette contrainte vient du fait que le faisceau optique émis par une source d'images (non représentée sur la figure 2) est renvoyé dans le cas d'une visière mono élément du côté opposé à l'oeil qu'il est censé éclairer. Les vecteurs **n**_{**g**} et **n**_{**d**} représentent les vecteurs normaux à la surface de la visière 21 aux points d'impact des axes oculaires Δg et Δd respectivement de l'oeil gauche et de l'oeil droit. Des repliements des trajets optiques sont donc nécessaires (notamment au moyen de miroirs de pliage notés 23g et 23d sur la figure 2, respectivement pour les voies de l'oeil gauche et de l'oeil droit) qui entraînent des trajets optiques plus longs que dans le cas d'une visière à deux éléments. Or cette propagation des faisceaux lumineux sur une longue distance dans l'air conduit à des diamètres de faisceaux importants, nécessitant des moyens de formation d'image de grande taille, incompatibles avec les contraintes d'encombrement des viseurs de casque.

La présente invention propose un nouveau type d'architecture optique pour viseur de casque à projection sur visière, permettant d'augmenter le champ du viseur tout en satisfaisant les contraintes de masse et d'encombrement imposées par le port sur la tête.

Le document US-A-3 923 370 divulgue un système de vision monté sur la tête d'un pilote, comprenant une visière traitée partiellement de façon à réfléchir la lumière.

Plus précisément, l'invention propose une architecture optique à encombrement réduit pour viseur de casque grand champ, comprenant les caractéristiques récitées dans la revendication 1. Les revendications dépendantes définissent des modes de réalisation additionnels.

D'autres avantages et caractéristiques apparaîtront plus clairement à la lecture de la description qui suit, illustrée par les figures annexées qui représentent :
- les figures 1A et 1B, respectivement une vue de dessus simplifiée d'une visière à deux éléments et les champs vus de l'oeil gauche et de l'oeil droit dans le cas de l'utilisation d'une visière du type de celle de la figure 1A (déjà décrites) ;
- la figure 2, une vue de dessus simplifiée d'un viseur de casque avec visière mono élément (déjà décrite) ;
- la figure 3, un schéma d'un exemple de réalisation d'une architecture optique pour viseur de casque selon l'invention (une voie représentée) ;
- les figures 4A et 4B des vues de face et de profil d'un viseur de casque avec une architecture optique de type de celle décrite sur la figure 3.

Sur ces figures, les éléments identiques sont référencés par les mêmes repères.

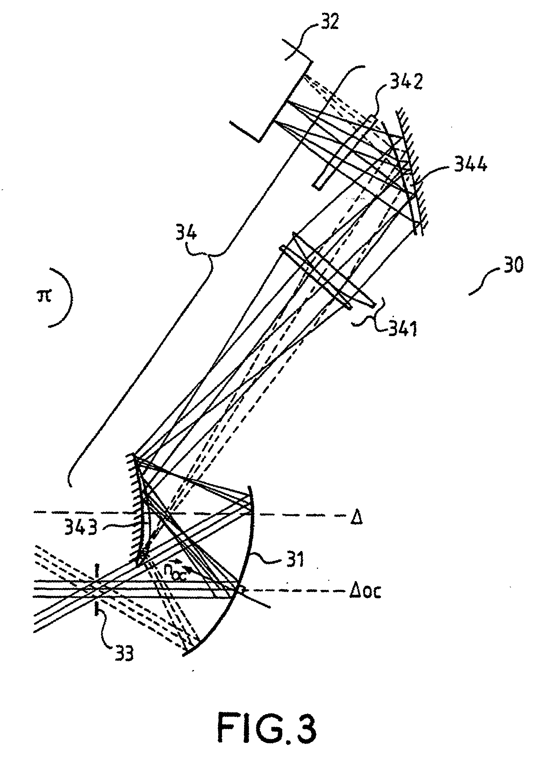

La figure 3 représente le schéma d'une architecture optique 30 à encombrement réduit pour viseur de casque grand champ selon l'invention. Sur cette figure, une seule voie est représentée correspondant à la projection par une visière mono élément 31 d'une image émise par une source d'images 32 devant un oeil du pilote dont la pupille est noté 33 sur la figure 3 et l'axe oculaire est noté Δ_{oc}. L'architecture optique 30 comprend également une optique relais 34 permettant de transporter l'image entre la source d'images et la visière 31, c'est à dire de former de l'image émise par la source 32 une image intermédiaire positionnée dans un plan focal de la visière. L'optique relais comprend classiquement des moyens de formation d'images (dans l'exemple de la figure 3, ces moyens sont réduits de façon simplifiée à un doublet, noté 341, et d'une lentille, notée 342) et au moins deux miroirs de pliage (dont un miroir frontal noté 22 sur la figure 2 et 343 sur la figure 3) permettant de renvoyer vers l'oeil du côté duquel la source d'images est située le faisceau lumineux issu de ladite source. Ces deux miroirs apparaissent sur la figure 2 (22, 23d ou 23g). Sur la figure 3, pour une meilleure compréhension de l'invention, l'architecture est représentée « dépliée », c'est à dire sans tenir compte du miroir de pliage noté 23g ou 23d dans la représentation de la figure 2. Elle est donc représentée dans le plan π contenant l'axe oculaire Δ_{oc} et le vecteur n_{oc} normal à la surface de la visière au point d'intersection de l'axe oculaire avec la visière. Ce plan π doit également être un plan de symétrie de l'ensemble des moyens de formation d'images de l'optique relais « dépliée » pour corriger correctement les aberrations liées à l'utilisation hors axe de la visière. De ce fait, les miroirs 23d et 23g de la figure 2, qui ne peuvent pas présenter le π comme plan de symétrie, sont nécessairement des miroirs plans.

Par contre, un troisième miroir de pliage, noté 344, est prévu, permettant notamment de replier l'architecture optique le long du casque. Dans l'exemple de la figure 3, seule une optique relais est représentée, correspondant à la projection sur un oeil. En pratique, dans le cas d'une vision binoculaire, l'architecture optique comprend deux optiques relais correspondant chacune à la projection d'une ou plusieurs source(s) d'images sur un oeil, le miroir frontal étant commun aux deux optiques relais.

La source d'images est, dans un mode de réalisation, une image provenant d'un capteur, tel que la face arrière d'un intensificateur de lumière standard couplé à un objectif de prise de vue (non représenté). D'autres sources d'images peuvent être utilisées, comme par exemple une source délivrant des informations relatives au vol et émises par exemple par un tube à rayons cathodiques (ou CRT selon l'abréviation anglo-saxonne « cathodic ray tube »), par un écran à cristaux liquides, etc. Une telle source peut être utilisée seule ou, préférentiellement, couplée à une image provenant d'un capteur. Dans le cas d'une image provenant d'un capteur, il est nécessaire que l'architecture optique utilisée permette de projeter l'image vers l'oeil du côté duquel le capteur est situé, entraînant dans le cas de l'utilisation d'une visière mono élément, comme cela a été expliqué précédemment, des repliements du trajet optique et donc un allongement de celui-ci. L'architecture optique selon l'invention permet de résoudre les difficultés de réalisation technique engendrées par ces multiples repliements dans le cas notamment d'un viseur grand champ.

Ainsi, selon l'invention, la visière 31 mono élément est formée d'une surface de révolution non plane dont un axe de révolution, noté Δ sur la figure 3, est sensiblement parallèle à l'axe oculaire Δ_{oc} et sensiblement contenu dans le plan sagittal du pilote, au niveau du front. En outre, le miroir frontal de l'architecture optique selon l'invention est choisi non plan, sensiblement centré par rapport au plan sagittal du pilote, présentant un axe de révolution confondu avec l'axe Δ de révolution de la visière. Les paramètres géométriques du miroir sont calculés, selon l'invention, pour que l'enveloppe des faisceaux utiles (non diaphragmés par la pupille de l'oeil) se propageant entre ledit miroir frontal et les premiers moyens de formation d'images 341 de l'optique relais en amont du miroir frontal soit sensiblement contenue dans un cylindre de section sensiblement égale à la surface utile dudit miroir. Par surface utile, on entend la surface illuminée par les faisceaux se propageant entre la source et l'oeil. Grâce à cette architecture, les dimensions de l'enveloppe des faisceaux utiles, dont les deux faisceaux de bord de champ et le faisceau central sont représentés sur la figure 3, peuvent être limitées à des dimensions compatibles de l'encombrement acceptable de l'optique relais, défini notamment par la taille des premiers moyens de formations d'images 341.

La déposante a montré qu'une réalisation particulièrement intéressante du miroir frontal consiste à utiliser un miroir formé de deux dioptres dont l'un au moins présente une surface de révolution non plane, le dioptre interne étant réfléchissant, autrement dit une lentille avec une face réfléchissante. Plus particulièrement, une très bonne optimisation de l'enveloppe des faisceaux utiles entre le miroir frontal et les premiers moyens de formation d'images 341 est obtenue, comme cela apparaît sur la figure 3, avec des dioptres dont les surfaces de révolution sont convexes, asphériques, et dont l'axe de révolution est confondu avec l'axe Δ de révolution de la visière.

Avantageusement, la visière est formée d'une surface de révolution choisie asphérique, d'axe Δ, le choix des paramètres géométriques permettant également de contribuer à maintenir l'enveloppe des faisceaux utiles dans le volume recherché.

Dans la solution préférée de l'invention, l'optique relais 34 comprend au moins trois miroirs de pliage, l'un desdits miroirs, le miroir noté 344 sur la figure 3, positionné en amont des premiers moyens de formation d'images 341, et dont le plan π est également un plan de symétrie, permettant en outre de corriger au moins une partie des aberrations introduites par le miroir frontal 343. En effet, la fonction du miroir frontal selon l'invention est essentiellement photométrique, permettant de réduire l'enveloppe des faisceaux utiles, mais le miroir frontal selon l'invention ne contribue pas à la qualité de l'image. Avantageusement le miroir de correction des aberrations 344 est également un miroir de type lentille avec une face réfléchissante, formé de deux dioptres dont un dioptre interne réfléchissant et dont l'un au moins des deux dioptres présente une surface de révolution non plane. La déposante a ainsi montré qu'avec un miroir frontal du type de celui représenté figure 3, un miroir de correction 344 présentant deux dioptres avec des surfaces de révolution asphériques, peut permettre une bonne compensation des aberrations géométriques et chromatiques, ainsi que de la distorsion, induites par le miroir frontal 343.

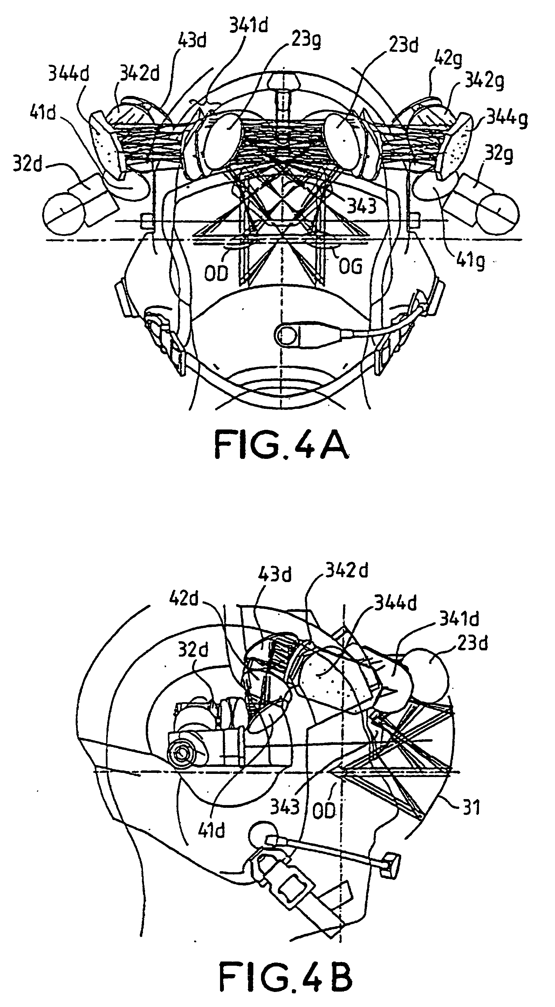

A titre d'exemple, les figures 4A et 4B montrent l'implantation d'une architecture optique du type de celle décrite sur la figure 3 sur un casque, selon des vues respectivement de face et de profil. Il s'agit ici d'un viseur binoculaire comprenant une voie pour l'oeil gauche OG et une voie pour l'oeil droit OD, les éléments optiques des différentes voies étant indexés respectivement par la lettre « g » pour l'oeil gauche et « d » pour l'oeil droit. L'architecture optique illustrée dans cet exemple comprend ainsi, pour chaque oeil, une source d'images (32g et 32d), formée dans cet exemple d'un intensificateur de lumière couplé à un objectif de prise de vue. Les images formées par un intensificateur de lumière donné sont projetées vers l'oeil du côté duquel est positionné ledit intensificateur. L'architecture optique du viseur comprend également une visière mono élément 31 et deux optiques relais associées chacune à un oeil, les deux optiques relais étant identiques dans cet exemple pour chacune des voies. On décrit par exemple la voie de l'oeil droit, qui est représentées sur les figures 4A et 4B. Les images sont donc émises par la source d'images 32d. Puis l'optique relais, qui permet de transporter les images émises entre la source 32d et la visière 31, comprend un ensemble de miroirs de pliage (41d, 43d, 344d, 23d et le miroir frontal 343) ainsi que des moyens de formation d'images (notamment les éléments 42d, 342d et le doublet 341 d qui constitue les premiers moyens de formation d'images en amont du miroir frontal 343). En particulier, dans cet exemple de réalisation de l'architecture optique selon l'invention, le miroir frontal est formé d'un miroir avec deux dioptres convexes, dont les surfaces sont de révolution, asphériques, avec un axe de révolution confondu avec l'axe de révolution de la visière 31 dont la surface est elle-même asphérique. Grâce à cette architecture, l'enveloppe des faisceaux utiles se propageant entre le miroir frontal et le doublet 341 d est sensiblement contenue dans un cylindre de section sensiblement égale à la surface utile du miroir frontal, permettant ainsi de limiter la taille du doublet 341d (typiquement son diamètre doit rester inférieur à environ 60 mm) et de limiter l'encombrement de l'optique relais à des dimensions acceptables, même pour un viseur grand champ, typiquement de l'ordre de 60°. Dans cet exemple, comme dans l'exemple de la figure 3, le miroir de pliage 344d est également un miroir de type lentille avec une surface réfléchissante dont les dioptres présentent des surfaces de révolution non planes calculées pour réduire les aberrations géométriques et chromatiques introduites par le miroir frontal.

Ainsi, la déposante a montré qu'il était possible, grâce à l'architecture optique selon l'invention dont des exemples avantageux mais non limitatifs ont été décrits ci-dessus, de proposer un viseur de casque grand champ, avec visière mono élément et qui présente de surcroît un encombrement acceptable pour une utilisation opérationnelle et une bonne qualité d'images.

## Revendications

1. Système optique à encombrement réduit pour viseur de casque grand champ, comprenant au moins une source d'image (32) de champ donné, une visière mono élément (31) permettant la projection à l'infini de ladite image devant un oeil d'un pilote porteur du casque, au moins une optique relais (30) pour transporter ladite image entre la source d'images et la visière, l'optique relais comprenant des moyens de formation d'images (342, 341) et au moins deux miroirs de pliage dont un miroir frontal (343) de surface donnée, le système optique étant arrangé tel que, lorsque le casque est porté par le pilote :
- ladite visière (31) est formée d'une surface de révolution dont un axe de révolution (Δ) est sensiblement parallèle à l'axe oculaire (Δ_{oc}) et sensiblement contenu dans le plan sagittal du pilote, au niveau du front,
- le miroir frontal (343) est non plan, présentant un axe de révolution confondu avec ledit axe (Δ) de révolution de la visière et dont les paramètres géométriques sont calculés de telle sorte que l'enveloppe des faisceaux utiles, c'est-à-dire non diaphragmés par la pupille de l'oeil du pilote, se propageant entre ledit miroir frontal et les moyens (341) de formation d'images de l'optique relais en amont du miroir frontal soit sensiblement contenue dans un cylindre de section sensiblement égale à la surface utile dudit miroir,
et étant **caractérisé en ce que** la visière (31) et le miroir (343) sont arrangés de façon à renvoyer, après réflexions successives sur le miroir (343) et la visière (31), vers l'oeil du côté duquel la source (32) est située un faisceau lumineux issu de ladite source (32).

2. Système optique selon la revendication 1, **caractérisée en ce que** ledit miroir frontal (343) est un miroir formé de deux dioptres dont l'un au moins présente une surface de révolution non plane, le dioptre interne étant réfléchissant.

3. Système optique selon la revendication 2, **caractérisée en ce que** les surfaces des deux dioptres formant le miroir frontal sont des surfaces de révolution convexes, asphériques, dont l'axe de révolution est confondu avec ledit axe (Δ) de révolution de la visière.

4. Système optique selon l'une des revendications précédentes, **caractérisée en ce que** la visière (31) est formée d'une surface de révolution asphérique.

5. Système optique selon l'une des revendications précédentes, **caractérisée en ce que** l'optique relais (34) comprend au moins trois miroirs de pliage, l'un desdits miroirs (344), positionné en amont desdits premiers moyens de formation d'images, permettant en outre de corriger au moins une partie des aberrations introduites par ledit miroir frontal.

6. Système optique selon la revendication 5, **caractérisée en ce que** ledit miroir de pliage (344) est un miroir formé de deux dioptres dont un dioptre interne réfléchissant et dont l'un au moins des deux dioptres présente une surface de révolution non plane.

7. Système optique selon la revendication 6, **caractérisée en ce que** les surfaces des deux dioptres formant ledit miroir de pliage (344) sont des surfaces de révolution non planes.

8. Système optique selon l'une des revendications précédentes, **caractérisée en ce qu'**une source d'images est la face émettrice d'un tube intensificateur de lumière optiquement couplé à un objectif de prise de vue.

9. Système optique selon l'une des revendications précédentes, **caractérisée en ce qu'**elle comprend au moins deux sources d'images (32d, 32g) positionnées de part et d'autre du casque et deux optiques relais associées chacune à un oeil du pilote, chaque optique relais étant destinée à assurer le transport des images émises par une source d'images vers un oeil du pilote (OD, OD), ledit miroir frontal (343) étant commun aux deux optiques relais.

## Patentansprüche

1. Optisches System mit geringem Raumbedarf für eine Helmvisiervorrichtung mit großem Sichtfeld, das mindestens eine Bildquelle (32) mit einem gegebenen Feld, ein einstückiges Visier (31), das die Projektion des Bilds ins Unendliche vor dem Auge eines den Helm tragenden Piloten erlaubt, mindestens eine Relaisoptik (30), um das Bild zwischen der Bildquelle und dem Visier zu transportieren, wobei die Relaisoptik Mittel zur Bildformung (342, 241) besitzt, und mindestens zwei Faltspiegel aufweist, von denen einer ein Frontalspiegel (343) mit gegebener Oberfläche ist, und wobei das optische System so angeordnet ist, dass, wenn der Helm vom Piloten getragen wird,
- das Visier (31) von einer drehsymmetrischen Fläche gebildet wird, deren Drehsymmetrieachse (Δ) im Wesentlichen parallel zur Sichtachse (Δ_{oc}) liegt und im Wesentlichen in der Sagittalebene des Piloten in Stirnhöhe verläuft,
- der Frontalspiegel (343) nicht-eben ist, eine Drehsymmetrieachse aufweist, die mit der Drehsymmetrieachse (Δ) des Visiers zusammenfällt, und seine geometrischen Parameter so berechnet sind, dass die Hüllkurve der Nutzstrahlen, d.h. der nicht von der Pupille des Auges des Piloten abgeblendeten Strahlen, die zwischen dem Frontalspiegel und den Mitteln (341) zur Bildformung der Relaisoptik vor dem Frontalspiegel verlaufen, im Wesentlichen in einem Zylinder enthalten ist, dessen Querschnitt im Wesentlichen gleich der Nutzfläche des Spiegels ist,
**dadurch gekennzeichnet, dass** das Visier (31) und der Spiegel (343) so angeordnet sind, dass sie einen von der Bildquelle (32) stammenden Lichtstrahl nach aufeinander folgenden Reflexionen am Spiegel (343) und am Visier (31) zu dem Auge senden, auf dessen Seite die Bildquelle (32) sich befindet.

2. Optisches System nach Anspruch 1, **dadurch gekennzeichnet, dass** der Frontalspiegel (343) ein von zwei Dioptern gebildeter Spiegel ist, von denen mindestens einer eine nicht-ebene drehsymmetrische Fläche aufweist, wobei der innere Diopter reflektierend ist.

3. Optisches System nach Anspruch 2, **dadurch gekennzeichnet, dass** die Flächen der beiden den Frontalspiegel bildenden Diopter konvexe asphärische drehsymmetrische Flächen sind, deren Drehsymmetrieachse mit der Drehsymmetrieachse (Δ) des Visiers zusammenfällt.

4. Optisches System nach einem der vorhergehenden Ansprüche, **dadurch gekennzeichnet, dass** das Visier (31) von einer asphärischen drehsymmetrischen Fläche gebildet wird.

5. Optisches System nach einem der vorhergehenden Ansprüche, **dadurch gekennzeichnet, dass** die Relaisoptik (34) mindestens drei Faltspiegel aufweist, wobei einer der Spiegel (344), der vor den ersten Bildformungsmitteln angeordnet ist, es außerdem ermöglicht, zumindest einen Teil der Verzerrungen zu korrigieren, die durch den Frontalspiegel erzeugt werden.

6. Optisches System nach Anspruch 5, **dadurch gekennzeichnet, dass** der Faltspiegel (344) ein Spiegel ist, der von zwei Dioptern gebildet wird, von denen ein innerer Diopter reflektiert und mindestens einer der beiden Diopter eine nicht-ebene drehsymmetrische Fläche aufweist.

7. Optisches System nach Anspruch 6, **dadurch gekennzeichnet, dass** die Flächen der beiden den Faltspiegel (344) bildenden Diopter nicht-ebene drehsymmetrische Flächen sind.

8. Optisches System nach einem der vorhergehenden Ansprüche, **dadurch gekennzeichnet, dass** eine Bildquelle die lichtemittierende Seite einer Lichtverstärkerröhre ist, die optisch mit einem Bildaufnahmeobjektiv gekoppelt ist.

9. Optisches System nach einem der vorhergehenden Ansprüche, **dadurch gekennzeichnet, dass** sie mindestens zwei Bildquellen (32d, 32g), die zu beiden Seiten des Helms positioniert sind, und zwei Relaisoptiken aufweist, die je einem Auge des Piloten zugeordnet sind, wobei jede Relaisoptik dazu bestimmt ist, die von einer Bildquelle ausgegebenen Bilder zu einem Auge des Piloten (OD, OG) zu transportieren, wobei der Frontalspiegel (343) für beide Relaisoptiken gemeinsam wirkt.

## Claims

1. Compact optical system for a helmet visor with wide field of view, comprising at least one image source (32) of given field of view, a mono-element sight (31) allowing projection to infinity of the said image placed in front of an eye of a pilot wearing the helmet, at least one relay optic (30) for transporting the said image between the image source and the sight, the relay optic comprising image-forming means (342, 341) and at least two folding mirrors, including a front mirror (343) of given area, the optical system being arranged such that, when the helmet is being worn by the pilot:
- the said sight (31) is formed from a surface of revolution, an axis of revolution (Δ) of which is substantially parallel to the ocular axis (Δ_{oc}) and lying substantially within the sagittal plane of the pilot, level with the forehead;
- the front mirror (343) is not plane, having an axis of revolution that coincides with the said axis (Δ) of revolution of the sight and the geometrical parameters of which are calculated in such a way that the envelope of the useful rays, that is to say those not stopped down by the pupil of the pilot's eye, propagating between the said front mirror and the image-forming means (341) of the relay optic upstream of the front mirror, is substantially contained within a cylinder of cross section substantially equal to the useful area of the said mirror, and being **characterized in that** the sight (31) and the mirror (343) are arranged so as to return, after successive reflections off the mirror (343) and the sight (31), back to the eye on that side of which the source (32) is located, a light beam coming from the said source (32).

2. Optical system according to Claim 1, **characterized in that** the said front mirror (343) is a mirror formed from two refractive interfaces, at least one of which has a non-plane surface of revolution, the internal refractive interface being reflective.

3. Optical system according to Claim 2, **characterized in that** the surfaces of the two refractive interfaces forming the front mirror are convex, aspherical surfaces of revolution, the axis of revolution of which is coincident with the said axis (Δ) of revolution of the sight.

4. Optical system according to one of the preceding claims, **characterized in that** the sight (31) is formed from an aspherical surface of revolution.

5. Optical system according to one of the preceding claims, **characterized in that** the relay optic (34) comprises at least three folding mirrors, one (344) of the said mirrors, which is positioned upstream of the said first image-forming means, furthermore making it possible to correct at least some of the aberrations introduced by the said front mirror.

6. Optical system according to Claim 5, **characterized in that** the said folding mirror (344) is a mirror formed from two refractive interfaces, an internal refractive interface of which is reflective and at least one of the two refractive interfaces of which has a non-plane surface of revolution.

7. Optical system according to Claim 6, **characterized in that** the surfaces of the two refractive interfaces forming the said folding mirror (344) are non-plane surfaces of revolution.

8. Optical system according to one of the preceding claims, **characterized in that** an image source is the emitting face of a light intensifier tube optically coupled to a camera objective.

9. Optical system according to one of the preceding claims, **characterized in that** it comprises at least two image sources (32d, 32g) that are positioned on either side of the helmet and two relay optics each associated with one eye of the pilot, each relay optic being intended to transport images emitted by an image source to one eye of the pilot (OD, OD), the said front mirror (343) being common to the two relay optics.
